# EUROPEAN PATENT APPLICATION

(11) **EP 4 621 633 A1**
(43) Date of publication of application: **24.09.2025**
(21) Application number: 25161140.6
(22) Date of filing: 28.02.2025
(51) Int. Cl.: G06F 40/20, G06F 40/30, G06F 40/35, G06F 40/56, G06N 5/02

(54) **METHOD AND APPARATUS TO FACILITATE BUILDING A LARGE LANGUAGE MODEL PIPELINE**

(30) Priority: 18.03.2024 US 202418607761
(71) Applicant: General Electric Company, Cincinnati, Ohio 45215 (US)
(72) Inventor: PESHAVE, Akshay Abhay, Niskayuna, 12309 (US); AGARWAL, Anurag, 560066 Bengaluru (IN); TANG, Liang, Niskayuna, 12309 (US); SUNILKUMAR, Gokul, Niskayuna, 12309 (US); BURPEE, Zachary, Niskayuna, 12309 (US); MURAKAMI, Matthew Thorne, Niskayuna, 12309 (US)
(74) Representative: Openshaw & Co.

(57) **Abstract**

A textual description of an issue pertaining to at least part of an apparatus is received (201) as input. A data store (102) is accessed (203) and a plurality of knowledge documents (311) that corresponds to the input is retrieved. A language generation prompt (307) is then generated (204), as a function of both the input and the plurality of knowledge documents and output (205) to a task-specific decoder (308) that generates a candidate recommendation (409) to address the aforementioned issue. That candidate recommendation is output to at least one human reviewer (306) who reviews the candidate recommendation as a function of the plurality of knowledge documents and who then provides a corresponding human-validated recommendation (309, 411) to address the issue. The task-specific decoder can be retrained (206) using the human-validation recommendation coupled with the corresponding textual description input.

## Description

### TECHNICAL FIELD

These teachings relate generally to large language models and more particularly to large language model pipelines.

### BACKGROUND

Large language models are known in the art. A large language model is a sophisticated artificial intelligence system designed to understand and generate human language. A large language model is typically trained on vast amounts of text data to learn patterns, grammar, and context, enabling the model to generate coherent and contextually appropriate responses. By using deep learning techniques, a large language model can analyze and process language at a complex level, making it capable of understanding nuanced queries and generating highly relevant and accurate outputs.

A large language model can be augmented with knowledge retrieval. Such augmentation typically involves integrating external information sources to enhance the model's understanding and response capabilities. By incorporating a knowledge retrieval system, the large language model can access information that can potentially include relevant subject matter content to thereby facilitate providing accurate and up-to-date responses. This integration can permit the model to go beyond its pre-trained knowledge.

### BRIEF DESCRIPTION OF DRAWINGS

Various needs are at least partially met through provision of the method and apparatus to facilitate building a large language model pipeline described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a block diagram of an example apparatus for building a large language model in accordance with various embodiments of these teachings;
FIG. 2 comprises a flow view illustrating various methods that can be carried out, for example, by the illustrative apparatus of FIG. 1 ;
FIG. 3 comprises a schematic view of a maintenance retrieval augmented model that can be carried out, for example, by the illustrative apparatus of FIG. 1;
FIG. 4 comprises a schematic view of a training workflow that can be carried out, for example, by the illustrative apparatus of FIG. 1; and
FIG. 5 comprises a schematic view of a semantic lookup and prompt creation flow diagram that can be carried out, for example by the illustrative apparatus of FIG. 1.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Many apparatuses, such as jet turbine engines, are complex, both in design and in operation. It can be challenging to maintain, repair, and/or overhaul ("maintenance") such an apparatus in both a timely and appropriate manner. Automation is generally viewed as an approach that can assist in both of those regards, but automating maintenance activities for a complex apparatus can lead to frustratingly incorrect instructions and results. Automation efforts can, in fact, be counterproductive in such regards, especially as compared to similar non-automated instructions provided by a subject matter expert. The applicant has determined that attempting to automate such activities with a large language model, including even a large language model that is augmented with relevant subject matter knowledge retrieval, can fail to produce the desired benefits. These are all significant challenges in the context of aviation application settings where complex apparatuses are common.

Generally speaking, the various aspects of the present disclosure can be employed with various methods and/or apparatuses to facilitate building a knowledge-retrieval augmented Large Language Model pipeline to automate maintenance recommendations for parts of an apparatus. These teachings will accommodate any of a wide variety of apparatuses including, but not limited to, a jet turbine engine. As regards a jet turbine engine, the aforementioned parts of the apparatus can include one or more of a compressor, a heat exchanger, a turbine, and an exhaust nozzle.

By one approach, these teachings can comprise receiving as input a textual description of an issue pertaining to at least part of the apparatus, accessing at least one data store and retrieving, as a function, at least in part, of information that corresponds to the input, a plurality of knowledge documents. The foregoing can then further comprise generating, as a function, at least in part, of both the input and the plurality of knowledge documents, a language generation prompt and outputting that language generation prompt to a task-specific decoder that generates, as a function, at least in part, of the language generation prompt, at least one candidate recommendation to address the issue that pertains to at least part of the apparatus. That at least one candidate recommendation is output to at least one human reviewer who reviews the at least one candidate recommendation as a function, at least in part, of at least part of the plurality of knowledge documents and who then provides a corresponding human-validated recommendation to address the issue that pertains to at least part of the apparatus. These teachings will also accommodate, for example, having the reviewer also validate the retrieved set of knowledge documents that was utilized to generate the candidate recommendation. A reviewer-validated knowledge documents list could also, of desired, identify documents not originally retrieved by the retriever as well as some documents retrieved by the retriever that the reviewer identifies as being incorrect, incomplete, out-dated, insufficiently supported, or the like.

These teachings will then accommodate retraining the task-specific decoder using, at least in part, the corresponding human-validation recommendation coupled with the corresponding textual description input. When available, the aforementioned validated (or otherwise characterized and/or annotated) knowledge documents (as validated by the human reviewer) can be used to update the retriever model periodically to improve the model's context-specific retrieval.

The foregoing can be carried out, at least in part, by a control circuit. By one approach, such a control circuit is at least a part of a retrieval augmented generation model.

By one approach, the aforementioned outputting of the language generation prompt to the task-specific decoder can comprise outputting the language generation prompt in combination with at least some of the plurality of knowledge documents to the task-specific decoder. By one approach, outputting the language generation prompt in combination with at least some of the plurality of knowledge documents to the task-specific decoder can comprise outputting the at least some of the plurality of knowledge documents without having specified any length limits. If desired, these teachings will accommodate outputting at least some of the plurality of knowledge documents to the task-specific decoder by outputting the at least some of the plurality of knowledge documents each as a single large language model knowledge item.

These teachings are highly flexible in practice and will accommodate a variety of modifications and/or supplemental actions. As one example in these regards, these teachings will accommodate extracting semantic context information from, at least in part, the aforementioned input, to provide extracted semantic context information. In that case, accessing the at least one data store and retrieving, as a function, at least in part, of the information that corresponds to the input, a plurality of knowledge documents can comprise accessing the at least one data store and retrieving, as a function, at least in part, of the extracted semantic context information, the plurality of knowledge documents.

By one approach, these teachings can be implemented as a human-in-the-loop maintenance assistant that drives efficiency and productivity of maintenance recommendation workflows by building a knowledge-retrieval augmented Large Language Models pipeline to automate maintenance recommendations for engine parts.

The aforementioned human can be, by one approach, a subject matter expert.

These teachings can serve to extract the semantic context of a maintenance issue description and retrieve relevant document groups of different knowledge types. The issue description along with the retrieved groups of knowledge documents can then be used to generate a language generation prompt that is used by a task-specific decoder to generate a candidate recommendation/answer for the issue that is output to the subject matter expert.

The task-specific decoder can be trained using relevant background subject matter-relevant data. The retrieved knowledge documents ground the recommendation generation and can also serve as the explanation of the system's response. The subject matter expert validates the candidate answer along with the explanation, modifies the answer if needed, and the human-validated answer is provided to the end user. Further, the pair of issue description and human-validated answer is additional expert-verified data that can be used to update the model(s) in the system on an ongoing or occasional basis.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

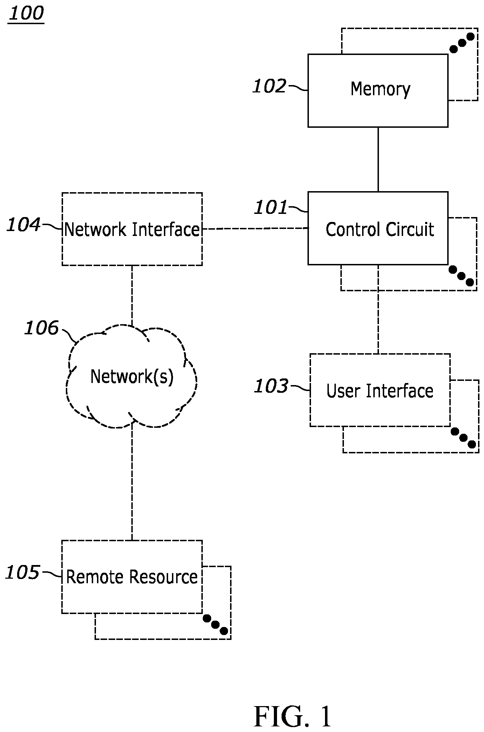

The foregoing and other benefits may become clearer upon making a thorough review and study of the following detailed description. Referring now to the drawings, and in particular to FIG. 1, an illustrative apparatus 100 that is compatible with many of these teachings will now be presented.

In this particular example, the enabling apparatus 100 includes a control circuit 101. Being a "circuit," the control circuit 101 therefore comprises structure that includes at least one (and typically many) electrically-conductive paths (such as paths comprised of a conductive metal such as copper or silver) that convey electricity in an ordered manner, which path(s) will also typically include corresponding electrical components (both passive (such as resistors and capacitors) and active (such as any of a variety of semiconductor-based devices) as appropriate) to permit the circuit to effect the control aspect of these teachings.

Such a control circuit 101 can comprise a fixed-purpose hard-wired hardware platform (including but not limited to an application-specific integrated circuit (ASIC) (which is an integrated circuit that is customized by design for a particular use, rather than intended for general-purpose use), a field-programmable gate array (FPGA), and the like) or can comprise a partially or wholly-programmable hardware platform (including but not limited to microcontrollers, microprocessors, and the like). These architectural options for such structures are well known and understood in the art and require no further description here. This control circuit 101 is configured (for example, by using corresponding programming as will be well understood by those skilled in the art) to carry out one or more of the steps, actions, and/or functions described herein.

It will be appreciated that the control circuit 101 may comprise a single integrated platform or may comprise a plurality of such circuits that work in cooperation with one another.

The control circuit 101 operably couples to a memory 102. This memory 102 may be integral to the control circuit 101 or can be physically discrete (in whole or in part) from the control circuit 101 as desired. This memory 102 can also be local with respect to the control circuit 101 (where, for example, both share a common circuit board, chassis, power supply, and/or housing) or can be partially or wholly remote with respect to the control circuit 101 (where, for example, the memory 102 is physically located in another facility, metropolitan area, or even country as compared to the control circuit 101).

As with the control circuit 101, the memory 102 may comprise a singular structure or may comprise a plurality of memory platforms that collectively comprise the "memory" of this apparatus 100.

For the sake of an illustrative example, and without intended any particular limitations, the control circuit 101 can be configured, at least in part, as at least a part of a retrieval-augmented generation model. A retrieval-augmented generation model is a type of natural language processing model that combines elements of both retrieval and generation approaches. In this model, a retrieval mechanism is employed to retrieve relevant information from a pre-existing dataset or knowledge base. This retrieved information is then used to augment the generation process, where the model generates new, contextually relevant content based on the retrieved knowledge.

In addition to information such as the knowledge documents described herein, this memory 102 can serve, for example, to non-transitorily store the computer instructions that, when executed by the control circuit 101, cause the control circuit 101 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as a dynamic random access memory (DRAM).)

By one optional approach the control circuit 101 also operably couples to one or more user interfaces 103. This user interface 103 can comprise any of a variety of user-input mechanisms (such as, but not limited to, keyboards and keypads, cursor-control devices, touch-sensitive displays, speech-recognition interfaces, gesture-recognition interfaces, and so forth) and/or user-output mechanisms (such as, but not limited to, visual displays, audio transducers, printers, and so forth) to facilitate receiving information and/or instructions from a user and/or providing information to a user.

If desired the control circuit 101 can also operably couple to a network interface 104. So configured the control circuit 101 can communicate with other elements (both within the apparatus 100 and/or external thereto, such as one or more remote resources 105) via one or more intervening networks 106 (such as, but not limited to, the Internet). Network interfaces, including both wireless and non-wireless platforms, are well understood in the art and require no particular elaboration here.

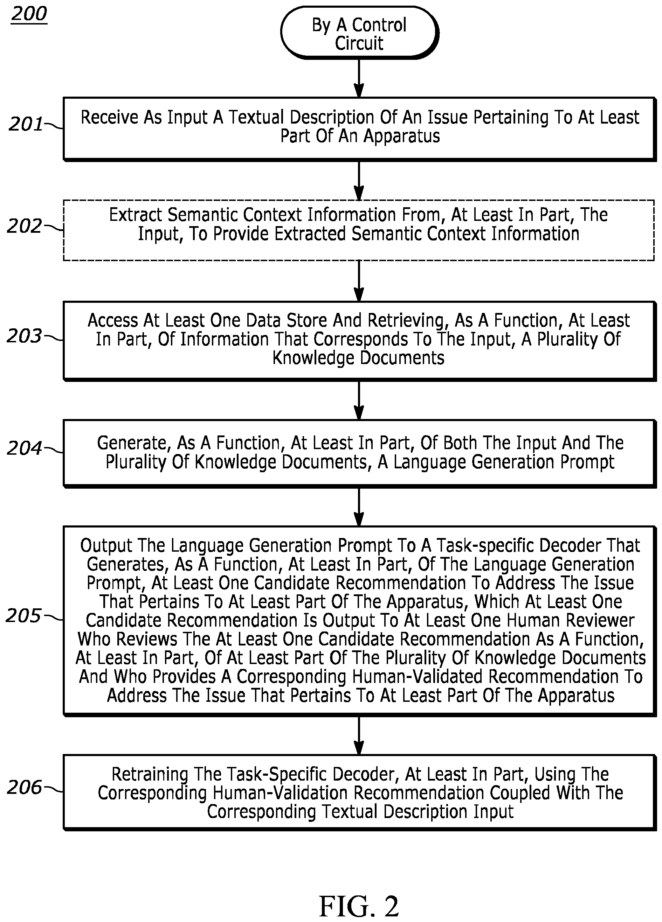

Referring now to FIG. 2, a process 200 that can be carried out, at least in part, by the foregoing apparatus 100 will be described. For the sake of an illustrative example, the described steps are carried out by the aforementioned control circuit 101 (for example, by a hard-wired configuration in the case where the control circuit 101 is, for example, an ASIC or FPGA, or by executing corresponding software instructions as stored in the aforementioned memory 102 as described above). Generally speaking, this process 200 serves to facilitate building a knowledge-retrieval augmented Large Language Model pipeline to automate maintenance, repair, and overhaul recommendations for parts of an apparatus such as a jet turbine engine (where the parts may include at least some of a compressor, a heat exchanger, a turbine, and an exhaust nozzle).

At block 201, this process 200 provides for receiving as input (via, for example, the aforementioned user interface 103 or network interface 104) a textual description of an issue pertaining to at least a part of the aforementioned apparatus (such as, but not limited to, a compressor, a heat exchanger, a turbine, and/or an exhaust nozzle for a jet turbine engine). This text may be entered, for example, by a technician that is working on the apparatus (for example, such a technician may source this text to refer to a possible issue with a turbine blade). This textual description may conform to some form or format of choice, or may essentially comprise a free-form submission. The textual description may be received via any desired mechanism including, but not limited to, a text message, an email, a scanned and OCRed document, input received via a smartphone app or a browser-based service, and so forth. The length of the textual description may be length limited or left without any such encumbrance as desired. These teachings will also accommodate receiving the textual description in a first human language (such as Chinese) and automatically translating that textual description into a second, different human language (such as English).

These teachings will also accommodate receiving one or more categorical inputs such as engine model or part identification. Such information can be leveraged later in the process 200 to pre-select/pre-filter knowledge indexes pertaining to the selected categorical inputs. Alternatively, if desired, such categorical information may be included in the retriever and language generator prompts described herein. An illustrative example prompt might be: engine_model: xyz description: [textual description].

At optional block 202, this process 200 provides for extracting semantic context information from, at least in part, the aforementioned input, to provide extracted semantic context information. Generally speaking, automatically extracting semantic context information from text involves the use of natural language processing techniques to understand the meaning and relationships between words, phrases, and sentences within a given text. Semantic content extraction can begin, by one approach, by breaking down the text into individual words or tokens. This helps in simplifying the processing and understanding the basic building blocks of the content. Each token can then be tagged with its corresponding part of speech (noun, verb, adjective, etc.). This helps in understanding the grammatical structure and the role of each word in a sentence. Named entity recognition can be used to identify and classify key information in the text into predefined categories such as the names of parts or components, locations, expressions of times, quantities, various metrics, and so forth. Dependency parsing can then serve to establish relationships between so-called head words and words that modify those head words. Coreference resolution can serve to identify expressions that refer to a same entity in a text. Semantic role labeling can serve to assign labels to words or phrases in a sentence to indicate the semantic role of those words/phrases in the context of the predicate or action - for example, what component is presenting what condition? Relation extraction can serve to identify and classify the relationships between entities within the text. Based on the extracted entities, relationships, and roles, an ontology or taxonomy can be built that represents the knowledge in a structured form. And, if desired, the extracted information can be enriched and validated by cross-referencing with external databases or knowledge bases like DBpedia, YAGO, or any of a variety of available ontologies. Other approaches can be utilized as desired.

At block 203, this process 200 provides for accessing at least one data store and retrieving, as a function, at least in part, of information that corresponds to the input, a plurality of knowledge documents. Part or all of that data store may reside in the aforementioned memory 102 and/or in one or more remote resources 105 (such as Internet-accessed private and/or public information servers).

These teachings will accommodate a variety of different types of knowledge documents. Examples include, but are not limited to, private or public product and/or operator manuals, repair manuals, white papers, masters and doctoral theses, symposium papers, and so forth.

By one approach, these teachings will accommodate having these knowledge documents grouped by pre-defined knowledge types. For example, one pre-defined knowledge type might pertain to jet turbine engine heat exchangers, another might pertain to jet turbine engine compressors, while yet another pre-defined knowledge type might pertain to jet turbine engine turbine blades. As used below, these grouped knowledge documents can serve as the evidence/explanations provided to a subject matter expert as well as to the end users who will receive the output recommendations of this process 200.

By one approach, the data store can comprise, at least in part, a vector store corresponding to a knowledge type that is populated and queried by a domain-specific encoder/retriever (i.e., a language model).

By one approach, in lieu of the foregoing or in combination therewith, the knowledge types may be defined based on semantics specific to the organization that employs the process 200 and/or that are specific to a particular industry or regulatory standards that are developed by third parties (including industry groups, standards-setting bodies, and/or government regulatory agencies).

By one approach, the number of relevant knowledge items retrieved per knowledge group can be either fixed (for example, via corresponding configuration files) or flexible based on a semantic similarity score that can be computed by the retriever. The threshold for such a similarity score can itself be fixed or can be dynamically adjusted on an ongoing basis based on feedback from the subject matter expert discussed herein.

At block 204, this process 200 provides for generating, as a function, at least in part, of both the aforementioned input and the plurality of knowledge documents, a language generation prompt. A language generation prompt is an input or command given to a language model, typically to generate human-like text or responses. Such a prompt typically serves as a starting point or instruction for the model to understand the desired output. The prompt can be in the form of a question, a statement, or any form of text input that guides the model in producing relevant and coherent language-based content.

It is possible that there may be an absence of relevant knowledge documents produced by the foregoing step. In this case, if desired, these teachings will accommodate utilizing a language generation prompt that consists only of the input that is provided to a separate task specific decoder that is trained to generate recommendations using only input description text. By one approach, recommendations generated in such cases would require mandatory manual attachment of evidence (i.e., knowledge documents selected, for example, by human intervention) to support the final recommendations by the subject matter expert.

At block 205, the process 200 provides for outputting the language generation prompt to a task-specific decoder (that may, if desired, be fulfilled by the aforementioned control circuit 101 or that may be fully or partially realized by a standalone circuit platform) that generates, as a function, at least in part, of the language generation prompt, at least one candidate recommendation to address the original issue that pertains to at least part of the apparatus. By one approach, outputting the language generation prompt to the task-specific decoder comprises outputting both the language generation prompt and at least some of the plurality of knowledge documents to the task-specific decoder. By one approach, all of the plurality of knowledge documents are co-submitted to the task-specific decoder. Examples of providing knowledge documents to the task-specific decoder are provided below. By one approach, the aforementioned control circuit 101 so provides such knowledge documents.

Pursuant to these teachings, this at least one candidate recommendation can be output to at least one human reviewer who reviews the at least one candidate recommendation as a function, at least in part, of at least part (or all) of the plurality of knowledge documents and who provides a corresponding human-validated recommendation to address the aforementioned issue that pertains to at least part of the apparatus.

By one approach, the human reviewer is a subject matter expert in the context of the apparatus/part/knowledge documents. These teachings will support identifying subject matter experts using subjective and/or objective criteria as desired. Objective criteria may include such things as being a control title holder in a particular engineering domain (a control title holder in a specific engineering domain being an individual that holds authority and responsibility for overseeing and managing the technical aspects, standards, and practices within that domain), a person who has achieved a particular academic degree or degree in a particular subject or subjects, and so forth.

The aforementioned review of the at least one candidate recommendation as a function, at least in part, of at least part (or all) of the plurality of knowledge documents can help to provide the subject matter expert with an evidentiary basis for understanding and apprising the candidate recommendation. This evidentiary basis, in turn, can help to ensure the accuracy and relevancy of the recommendation and to help avoid so-called hallucinations that such models can occasionally produce.

These teachings will support any of a variety of embellishments in the foregoing regards. By one approach, for example, particular portions of the candidate recommendation can include a footnote or active link that informs the reader of a particular knowledge document (or a particular part of a particular knowledge document) that supports (or that possibly contradicts) that particular portion. Color coding can also serve in these same regards. As another example, relevant portions of given relied-upon/leveraged knowledge documents can be included in-line or otherwise as a comment within the text of the candidate recommendation. As yet another example, weighting indicia can be employed to communicate the weight that the responding system accords to a given knowledge document. This can be particularly helpful when the knowledge documents are not uniform in their positions, explanations, or conclusions.

As noted above, some or all of the plurality of knowledge documents can be submitted to the task-specific decoder. By one approach, the foregoing can make use of conventional retrieval-augmented generation (RAG) models that utilize fixed length sentence chunking (such as conventional dense passage retrieval), where the length of a so-called sentence chunk is specified in terms of tokens. In a typical large language model protocol, that length is fixed in the sense that only X tokens will be considered. As an illustrative example, a document having 10 sentences is broken down into tokens, and the system will only accept the first X tokens. A first such token might be, for example, a first sentence and a half of a follow-on second sentence, while a second token encompasses only a further part of that second sentence.

The applicant has determined that the foregoing approach can present problems in the context of the present teachings. In particular, each such token will typically represent only a very few words and hence each token may have a correspondingly relatively low semantic value. In addition, the applicant has determined that a typical application of those teachings will limit the methodology to far fewer tokens than the downstream decoder can in fact technologically accept.

Accordingly, if desired and by one approach, some or all of these submitted knowledge documents can be submitted without having specified any length limits. By one approach, submitted knowledge documents can each be submitted as a single large language model knowledge item. Which is to say, by avoiding a specification of the length parameters that characterizes other approaches, a single token can encompass/represent thousands of words, such that a single token can correspond to a single one of the knowledge documents. The corresponding semantic value of each token will therefore typically be much higher than that which characterizes many prior art practices.

At block 206, this process 200 provides for retraining the task-specific decoder, using, at least in part, the aforementioned corresponding human-validation recommendation coupled with the corresponding textual description input. Such retraining can occur on a case-by-case basis, or the provided results for a plurality of different prompts/candidate recommendations can be batched for this purpose. These teachings will also accommodate, if desired, also updating the retriever vector indexes to thereby facilitate continuously improving evidence retrieval and prompt generation. The retraining can be initiated and/or otherwise conducted, in whole or in part, by a human and/or by a non-human entity such as the control circuit 101.

Further details that comport with these teachings will now be presented. It will be understood that the specific details of these examples are intended to serve an illustrative purpose and are not intended to suggest any particular limitations with respect to these teachings.

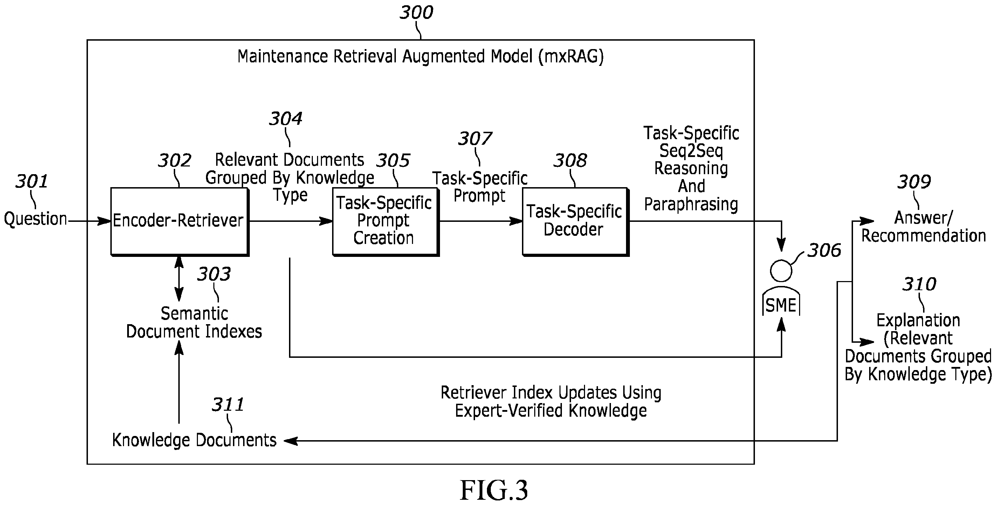

FIG. 3 presents an illustrative example of a retrieval-augmented model 300 that is configured to assist with maintenance of one or more parts of a jet turbine engine. This particular example presumes that an aviation context encoder and a task-specific decoder are trained separately. By one approach, the aforementioned control circuit 101 is configured as this retrieval-augmented model 300.

In this example, the issue (in the form of a textual question 301) is input to an encoder-retriever 302 that, by one approach, makes use of semantic document indexes 303 and outputs corresponding retrieved knowledge documents 304 that are grouped by knowledge type and that are provided both to a task-specific prompt creation function 305 and to a subject matter expert 306. The task-specific prompt creation function 305 generates a corresponding task-specific prompt 307 that is input to a task-specific decoder 308.

The task-specific decoder 308 outputs a corresponding candidate recommendation to the subject matter expert 306. In this example, the task-specific decoder 308 employs seq2seq techniques as part of generating that recommendation. Seq2seq (short for sequence-to-sequence) is a class of machine learning algorithms that translates one sequence of data into another. Seq2seq can be used in natural language processing, particularly for tasks like language translation, text summarization, and conversational modeling. The illustrated example uses a pair of neural networks: an encoder that processes the input sequence and encodes it into a fixed-dimensional context vector, and a decoder that uses this context vector to generate the output sequence.

Per this illustrative example, the subject matter expert 306 provides a final answer/recommendation 309 that can be used to facilitate real-world maintenance for a real-world apparatus such as the aforementioned jet turbine engine. In this example the subject matter expert 306 also provides an explanation 310 regarding, for example, why the candidate recommendation was correct, partially correct, or wholly incorrect. Either or both of those deliverables 309, 310 can then be fed back to, for example, update a retriever index corresponding to the knowledge documents 311 that underlay the corresponding candidate recommendation.

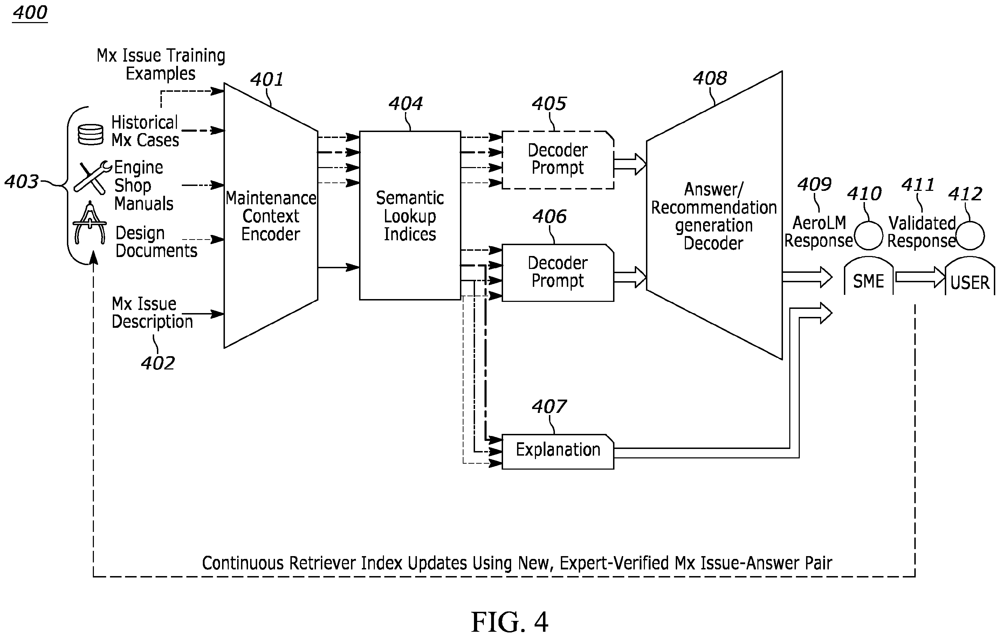

FIG. 4 presents an illustrative example of the training and inference workflows that comport with these teachings.

Generally speaking, the function of the semantic lookup indices 404 is to output decoder prompts with explanatory information. The dataflow from a decoder prompt 405 into an answer/recommendation generation decoder 408 represents a training phase while the data flow from a decoder prompt 406 and explanation 407 into the answer/recommendation generation decoder 408 through to a user 412 represents a, inference and periodic model update phase.

By one approach, the control circuit 101 is configured to carry out the actions of this overall workflow using, for example, corresponding instructions that are stored in the aforementioned memory 102. In this example, a maintenance context encoder 401 receives a maintenance issue description 402 along with knowledge documents 403 that are drawn, in this example, from relevant design documents, engine shop manuals, and historical maintenance case information (which may include maintenance issue training examples).

Semantic lookup indices 404 receives the output passed through by the maintenance context encoder 401 and outputs a generated decoder prompt, 405 for training or 406 for inference, in addition to corresponding explanatory information that represents the knowledge document(s) that inform those prompts.

An answer/recommendation generation decoder 408 generates a corresponding candidate recommendation 409 that is provided to a subject matter expert 410 (along with, in the appropriate use case, the aforementioned explanatory information 407). The subject matter expert 410 reviews the foregoing material(s) and, when able to validate the candidate recommendation 409, passes a corresponding validated response 411 to one or more users 412 who will effect the recommendation as regards maintenance of the apparatus at issue. That validated response 411 can also be leveraged by updating the relevant retriever indices to reflect that validation.

When the subject matter expert 410 does not validate the candidate recommendation, but instead modifies the recommendation to provide a more correct recommendation, this modified recommendation can be provided to the user 412 and can also be used for retraining.

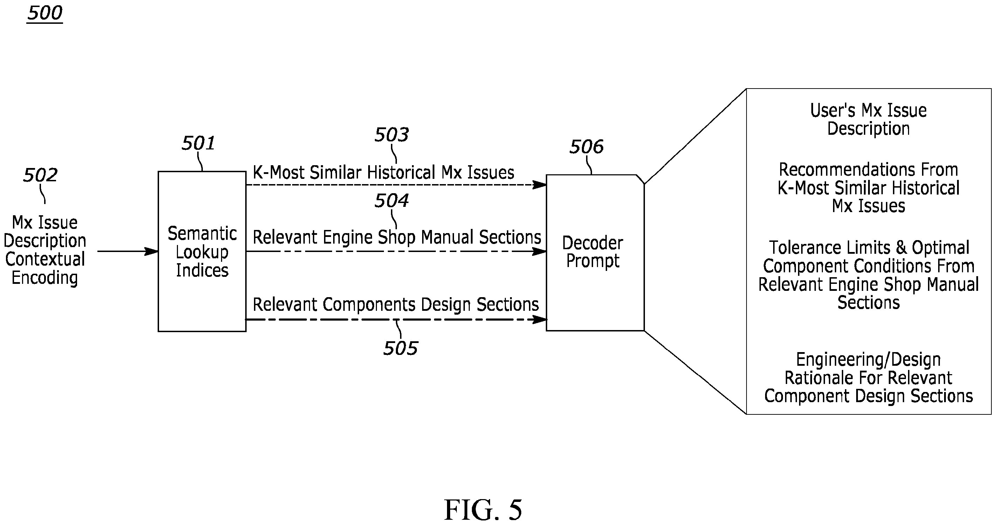

FIG. 5 presents an illustrative example of a semantic lookup and prompt creation flow 500. This flow can be carried out by the aforementioned control circuit 101 when carrying out optional block 202 described above in the description of FIG. 2. In this example, the semantic lookup indices 501 receives as input a maintenance issue description contextual encoding 502. The indices 501 then output corresponding K-most similar historical maintenance issues 503, relevant engine shop manual sections 504, and relevant component design sections 505 to a decoder prompt generator 506. (In the context of data analysis or algorithm design, K-most refers to identifying the top K elements that appear with the highest frequency within a given dataset. Algorithms to solve this problem typically involve creating a frequency distribution of all elements, followed by using data structures like heaps, hash maps, or trees to efficiently track and sort these frequencies to extract the top k elements. These data structures might employ, for example, the original maintenance issue description, recommendations from K-most similar historical maintenance issues, tolerance limits and optimal component conditions from relevant engine shop manual sections, and engineering design rationale for relevant component design sections.

Further aspects of the disclosure are provided by the subject matter of the following clauses:
Clause 1. A method to facilitate building a knowledge-retrieval augmented Large Language Model pipeline to automate maintenance, repair, and overhaul recommendations for parts of an apparatus, comprising: by a control circuit: receiving as input a textual description of an issue pertaining to at least part of the apparatus; accessing at least one data store and retrieving, as a function, at least in part, of information that corresponds to the input, a plurality of knowledge documents; generating, as a function, at least in part, of both the input and the plurality of knowledge documents, a language generation prompt; outputting the language generation prompt to a task-specific decoder that generates, as a function, at least in part, of the language generation prompt, at least one candidate recommendation to address the issue that pertains to at least part of the apparatus, which at least one candidate recommendation is output to at least one human reviewer who reviews the at least one candidate recommendation as a function, at least in part, of at least part of the plurality of knowledge documents and who provides a corresponding human-validated recommendation to address the issue that pertains to at least part of the apparatus; wherein the task-specific decoder is re-trained, at least in part, using the corresponding human-validation recommendation coupled with the corresponding textual description input.
Clause 2. The method of any preceding clause wherein the apparatus comprises a jet turbine engine.
Clause 3. The method of any preceding clause wherein the parts of the apparatus include at least some of a compressor, a heat exchanger, a turbine, and an exhaust nozzle.
Clause 4. The method of any preceding clause wherein the control circuit comprises, at least in part, a part of a retrieval augmented generation model.
Clause 5. The method of any preceding clause wherein outputting the language generation prompt to the task-specific decoder comprises outputting the language generation prompt and at least some of the plurality of knowledge documents to the task-specific decoder.
Clause 6. The method of any preceding clause wherein outputting at least some of the plurality of knowledge documents to the task-specific decoder comprises outputting the at least some of the plurality of knowledge documents without having specified any length limits.
Clause 7. The method of any preceding clause wherein outputting at least some of the plurality of knowledge documents to the task-specific decoder comprises outputting the at least some of the plurality of knowledge documents each as a single large language model knowledge item.
Clause 8. The method of any preceding clause further comprising: extracting semantic context information from, at least in part, the input, to provide extracted semantic context information; and wherein accessing the at least one data store and retrieving, as a function, at least in part, of the information that corresponds to the input, a plurality of knowledge documents comprises accessing the at least one data store and retrieving, as a function, at least in part, of the extracted semantic context information, the plurality of knowledge documents.
Clause 9. A method to facilitate building a knowledge-retrieval augmented Large Language Model pipeline to automate maintenance, repair, and overhaul recommendations for parts of an apparatus, comprising: by a control circuit: receiving as input a textual description of an issue pertaining to at least part of the apparatus; accessing at least one data store and retrieving, as a function, at least in part, of information that corresponds to the input, a plurality of knowledge documents; generating, as a function, at least in part, of both the input and the plurality of knowledge documents, a language generation prompt; outputting the language generation prompt to a task-specific decoder that generates, as a function, at least in part, of the language generation prompt, at least one candidate recommendation to address the issue that pertains to at least part of the apparatus; by a human reviewer: accessing the at least one candidate recommendation and reviewing the at least one candidate recommendation as a function, at least in part, of at least part of the plurality of knowledge documents; providing a corresponding human-validated recommendation to address the issue that pertains to at least part of the apparatus; re-training the task-specific decoder, at least in part, using the corresponding human-validation recommendation coupled with the corresponding textual description input.
Clause 10. The method of any preceding clause wherein the apparatus comprises a jet turbine engine.
Clause 11. The method of any preceding clause wherein the control circuit comprises, at least in part, a part of a retrieval augmented generation model.
Clause 12. The method of any preceding clause wherein outputting the language generation prompt to the task-specific decoder comprises outputting the language generation prompt and at least some of the plurality of knowledge documents to the task-specific decoder.
Clause 13. The method of any preceding clause wherein outputting at least some of the plurality of knowledge documents to the task-specific decoder comprises outputting the at least some of the plurality of knowledge documents without having specified any length limits.
Clause 14. The method of any preceding clause wherein outputting at least some of the plurality of knowledge documents to the task-specific decoder comprises outputting the at least some of the plurality of knowledge documents each as a single large language model knowledge item.
Clause 15. The method of any preceding clause further comprising: by the control circuit: extracting semantic context information from, at least in part, the input, to provide extracted semantic context information; and wherein accessing the at least one data store and retrieving, as a function, at least in part, of the information that corresponds to the input, a plurality of knowledge documents comprises accessing the at least one data store and retrieving, as a function, at least in part, of the extracted semantic context information, the plurality of knowledge documents.
Clause 16. An apparatus to facilitate building a knowledge-retrieval augmented Large Language Model pipeline to automate maintenance, repair, and overhaul recommendations for parts of an apparatus, comprising: a control circuit configured to:
   receive as input a textual description of an issue pertaining to at least part of the apparatus; access at least one data store and retrieving, as a function, at least in part, of information that corresponds to the input, a plurality of knowledge documents;
   generate, as a function, at least in part, of both the input and the plurality of knowledge documents, a language generation prompt; output the language generation prompt; a task-specific decoder configured to receive the language generation prompt and to responsively generate, as a function, at least in part, of the language generation prompt,
   at least one candidate recommendation to address the issue that pertains to at least part of the apparatus, which at least one candidate recommendation is output to at least one human reviewer who reviews the at least one candidate recommendation as a function, at least in part, of at least part of the plurality of knowledge documents and
   who provides a corresponding human-validated recommendation to address the issue that pertains to at least part of the apparatus; wherein the task-specific decoder is re-trained, at least in part, using the corresponding human-validation recommendation coupled with the corresponding textual description input.
Clause 17. The apparatus of any preceding clause wherein the control circuit is configured, at least in part, as at least part of a retrieval augmented generation model.
Clause 18. The apparatus of any preceding clause wherein the control circuit is configured to output the language generation prompt in combination with at least some of the plurality of knowledge documents, and wherein the task-specific decoder is configured to receive the language generation prompt in combination with at least some of the plurality of knowledge documents.
Clause 19. The apparatus of any preceding clause wherein the control circuit is configured to output at least some of the plurality of knowledge documents to the task-specific decoder by, at least in part, outputting the at least some of the plurality of knowledge documents without having specified any length limits.
Clause 20. The apparatus of any preceding clause wherein the control circuit is configured to output at least some of the plurality of knowledge documents to the task-specific decoder by, at least in part, outputting the at least some of the plurality of knowledge documents each as a single large language model knowledge item.
Clause 21. A non-transitory computer readable storage medium comprising instructions that, when executed, cause a control circuit to receive as input a textual description of an issue pertaining to at least part of the apparatus; access at least one data store and retrieving, as a function, at least in part, of information that corresponds to the input, a plurality of knowledge documents; generate, as a function, at least in part, of both the input and the plurality of knowledge documents, a language generation prompt; output the language generation prompt; a task-specific decoder configured to receive the language generation prompt and to responsively generate, as a function, at least in part, of the language generation prompt, at least one candidate recommendation to address the issue that pertains to at least part of the apparatus, which at least one candidate recommendation is output to at least one human reviewer who reviews the at least one candidate recommendation as a function, at least in part, of at least part of the plurality of knowledge documents and who provides a corresponding human-validated recommendation to address the issue that pertains to at least part of the apparatus; wherein the task-specific decoder is re-trained, at least in part, using the corresponding human-validation recommendation coupled with the corresponding textual description input.
Clause 22. The non-transitory computer readable storage medium comprising instructions of any preceding clause that, when executed, cause the control circuit to be configured, at least in part, as at least part of a retrieval augmented generation model.
Clause 23. The non-transitory computer readable storage medium comprising instructions of any preceding clause that, when executed, cause the control circuit to be configured to output the language generation prompt in combination with at least some of the plurality of knowledge documents, and wherein the task-specific decoder is configured to receive the language generation prompt in combination with at least some of the plurality of knowledge documents.
Clause 24. The non-transitory computer readable storage medium comprising instructions of any preceding clause that, when executed, cause the control circuit to be configured to output at least some of the plurality of knowledge documents to the task-specific decoder by, at least in part, outputting the at least some of the plurality of knowledge documents without having specified any length limits.
Clause 25. The non-transitory computer readable storage medium comprising instructions of any preceding clause that, when executed, cause the control circuit to be configured to output at least some of the plurality of knowledge documents to the task-specific decoder by, at least in part, outputting the at least some of the plurality of knowledge documents each as a single large language model knowledge item

## Claims

1. A method to facilitate building a knowledge-retrieval augmented Large Language Model pipeline to automate maintenance, repair, and overhaul recommendations for parts of an apparatus, comprising:
by a control circuit (101):
receiving as input a textual description of an issue pertaining to at least part of the apparatus;
accessing at least one data store and retrieving, as a function, at least in part, of information that corresponds to the input, a plurality of knowledge documents (403) (311);
generating, as a function, at least in part, of both the input and the plurality of knowledge documents (403) (311), a language generation prompt; and
outputting the language generation prompt to a task-specific decoder (308) that generates, as a function, at least in part, of the language generation prompt, at least one candidate recommendation (309) to address the issue that pertains to at least part of the apparatus (100), which at least one candidate recommendation (309) is output to at least one human reviewer who reviews the at least one candidate recommendation (309) as a function, at least in part, of at least part of the plurality of knowledge documents (403) (311) and who provides a corresponding human-validated recommendation (309) to address the issue that pertains to at least part of the apparatus;
wherein the task-specific decoder (308) is re-trained, at least in part, using the corresponding human-validation recommendation (309) coupled with the corresponding textual description input.

2. An apparatus (100) to facilitate building a knowledge-retrieval augmented Large Language Model pipeline to automate maintenance, repair, and overhaul recommendations for parts of an apparatus, comprising:
a control circuit (101) configured to:
receive as input a textual description of an issue pertaining to at least part of the apparatus;
access at least one data store and retrieving, as a function, at least in part, of information that corresponds to the input, a plurality of knowledge documents (403) (311);
generate, as a function, at least in part, of both the input and the plurality of knowledge documents (403) (311), a language generation prompt;
output the language generation prompt;
a task-specific decoder (308) configured to receive the language generation prompt and to responsively generate, as a function, at least in part, of the language generation prompt, at least one candidate recommendation (309) to address the issue that pertains to at least part of the apparatus, which at least one candidate recommendation (309) is output to at least one human reviewer who reviews the at least one candidate recommendation (309) as a function, at least in part, of at least part of the plurality of knowledge documents (403) (311) and who provides a corresponding human-validated recommendation (309) to address the issue that pertains to at least part of the apparatus;
wherein the task-specific decoder (308) is re-trained, at least in part, using the corresponding human-validation recommendation (309) coupled with the corresponding textual description input.

3. The method or apparatus (100) of claim 1 or 2 wherein the apparatus comprises a jet turbine engine.

4. The method or apparatus (100) of claim 3 wherein the parts of the apparatus include at least some of a compressor, a heat exchanger, a turbine, and an exhaust nozzle.

5. The method or apparatus (100) of any preceding claim wherein the control circuit (101) comprises, at least in part, a part of a retrieval augmented generation model.

6. The method or apparatus (100) of claim 5 wherein outputting the language generation prompt to the task6specific decoder comprises outputting the language generation prompt and at least some of the plurality of knowledge documents (403) (311) to the task-specific decoder (308).

7. The method or apparatus (100) of claim 6 wherein outputting at least some of the plurality of knowledge documents (403) (311) to the task-specific decoder (308) comprises outputting the at least some of the plurality of knowledge documents (403) (311) without having specified any length limits.

8. The method or apparatus (100) of claim 6 wherein outputting at least some of the plurality of knowledge documents (403) (311) to the task-specific decoder (308) comprises outputting the at least some of the plurality of knowledge documents (403) (311) each as a single large language model knowledge item.

9. The method or apparatus (100) of any preceding claim further comprising:
extracting semantic context information from, at least in part, the input, to provide extracted semantic context information;
and wherein accessing the at least one data store and retrieving, as a function, at least in part, of the information that corresponds to the input, a plurality of knowledge documents (403) (311) comprises accessing the at least one data store and retrieving, as a function, at least in part, of the extracted semantic context information, the plurality of knowledge documents (403) (311).

10. A method to facilitate building a knowledge-retrieval augmented Large Language Model pipeline to automate maintenance, repair, and overhaul recommendations for parts of an apparatus, comprising:
by a control circuit (101):
receiving as input a textual description of an issue pertaining to at least part of the apparatus;
accessing at least one data store and retrieving, as a function, at least in part, of information that corresponds to the input, a plurality of knowledge documents (403) (311);
generating, as a function, at least in part, of both the input and the plurality of knowledge documents (403) (311), a language generation prompt; and
outputting the language generation prompt to a task-specific decoder (308) that generates, as a function, at least in part, of the language generation prompt, at least one candidate recommendation (309) to address the issue that pertains to at least part of the apparatus;
by a human reviewer:
accessing the at least one candidate recommendation (309) and reviewing the at least one candidate recommendation (309) as a function, at least in part, of at least part of the plurality of knowledge documents (403) (311);
providing a corresponding human-validated recommendation (309) to address the issue that pertains to at least part of the apparatus;
re-training the task-specific decoder (308), at least in part, using the corresponding human-validation recommendation (309) coupled with the corresponding textual description input.

11. The method of claim 10 wherein the apparatus comprises a jet turbine engine.

12. The method of claim 10 or 11 wherein the control circuit (101) comprises, at least in part, a part of a retrieval augmented generation model.

13. The method of claim 12 wherein outputting the language generation prompt to the task-specific decoder (308) comprises outputting the language generation prompt and at least some of the plurality of knowledge documents (403) (311) to the task-specific decoder (308).

14. The method of claim 13 wherein outputting at least some of the plurality of knowledge documents (403) (311) to the task-specific decoder (308) comprises outputting the at least some of the plurality of knowledge documents (403) (311) without having specified any length limits.

15. The method of claim 13 wherein outputting at least some of the plurality of knowledge documents (403) (311) to the task-specific decoder (308) comprises outputting the at least some of the plurality of knowledge documents (403) (311) each as a single large language model knowledge item.
